(19) Europäisches Patentamt / European Patent Office / Office européen des brevets

(11) **EP 4 513 436 A1**

(12) **EUROPEAN PATENT APPLICATION**
published in accordance with Art. 153(4) EPC

(43) Date of publication:
**26.02.2025 Bulletin 2025/09**

(21) Application number: **23790894.2**

(22) Date of filing: **02.03.2023**

(51) International Patent Classification (IPC):
*G06T 11/00* (2006.01)

(52) Cooperative Patent Classification (CPC):
**G06T 11/00**

(86) International application number:
**PCT/CN2023/079245**

(87) International publication number:
**WO 2023/202231 (26.10.2023 Gazette 2023/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.04.2022 CN 202210417793**

(71) Applicant: **Beijing Huarui Boshi Medical Imaging Technology Co., Ltd.
Beijing 102609 (CN)**

(72) Inventor: **GUAN, Mingtao
Beijing 102609 (CN)**

(74) Representative: **Günther, Constantin
Meissner Bolte Patentanwälte
Rechtsanwälte Partnerschaft mbB
Plathnerstraße 3A
30175 Hannover (DE)**

(54) **IMAGE RECONSTRUCTION METHOD AND APPARATUS, AND ELECTRONIC DEVICE AND STORAGE MEDIUM**

(57) The present disclosure belongs to the technical field of image reconstruction, and relates to an image reconstruction method and apparatus, and an electronic device and a storage medium. In the present disclosure, an actually measured data inversion objective function is minimized by means of a variational auto-encoder deep neural network, so as to obtain a target latent space parameter of the actually measured data inversion objective function, and the target latent space parameter is then decoded by using the variational auto-encoder deep neural network, so as to obtain a reconstructed image. The image reconstruction method comprises: acquiring actually measured data of a target; constructing, according to the actually measured data, an actually measured data inversion objective function which takes a latent space parameter of a variational auto-encoder deep neural network as an unknown number; minimizing the actually measured data inversion objective function by using the variational auto-encoder deep neural network, so as to obtain a target latent space parameter; and decoding the target latent space parameter by using the variational auto-encoder deep neural network, so as to obtain a target reconstructed image.

FIG. 1

(Flowchart: S1 — Acquiring actually measured data of a target → S2 — Constructing, according to the actually measured data, an actually measured data inversion objective function which takes a latent space parameter of a variational auto-encoder deep neural network as an unknown number → S3 — Minimizing the actually measured data inversion objective function by using the variational auto-encoder deep neural network, so as to obtain a target latent space parameter → S4 — Decoding the target latent space parameter by using the variational auto-encoder deep neural network, so as to obtain a target reconstructed image)

EP 4 513 436 A1

**Description**

**Cross-reference to Related Applications**

The present disclosure claims priority to Chinese Patent Application CN202210417793.1, entitled "Image Reconstruction Method and Apparatus, and Electronic Device and Storage Medium", filed on April 20, 2022, the entire content of which is incorporated herein by reference.

**Field of the Invention**

The present disclosure relates to the technical field of image reconstruction, and particularly to an image reconstruction method and apparatus, and an electronic device and a storage medium.

**Background of the Invention**

Electromagnetic data imaging is widely applied to the fields of biomedical imaging, nondestructive inspection, or the like, and during the imaging, electromagnetic field data of a to-be-detected object is collected by a sensor, and then, conductivity or dielectric constant distribution in the object is reconstructed using a certain image reconstruction method.
In terms of image reconstruction, a common method includes decomposing an inversion domain into pixels, and then reconstructing a discrete conductivity or dielectric constant by minimizing a residual of simulated data and measured data. A number of the pixels is usually much larger than a quantity of the data, and therefore, this is a non-linear ill-conditioned problem, which requires reasonable reconstruction relying on priori knowledge.

**Summary**

The present disclosure provides an image reconstruction method and apparatus, and an electronic device and a storage medium. In the present disclosure, an actually measured data inversion objective function is minimized by means of a variational auto-encoder deep neural network, so as to obtain a target latent space parameter of the actually measured data inversion objective function, and the target latent space parameter is then decoded by using the variational auto-encoder deep neural network, so as to obtain a reconstructed image.
In a first aspect, the present disclosure provides an image reconstruction method, including: acquiring actually measured data of the target; constructing, according to the actually measured data, an actually measured data inversion objective function which takes a latent space parameter of a variational auto-encoder deep neural network as an unknown number; minimizing the actually measured data inversion objective function by using the variational auto-encoder deep neural network, so as to obtain a target latent space parameter; and decoding the target latent space parameter by using the variational auto-encoder deep neural network, so as to obtain a target reconstructed image.
In some embodiments, the variational auto-encoder deep neural network includes a decoder and an encoder; the minimizing the actually measured data inversion objective function by using the variational auto-encoder deep neural network, so as to obtain a target latent space parameter includes: setting an initial model according to a target; encoding the initial model by using the encoder to obtain a code of the initial model; decoding the code by the decoder and performing calculation to obtain simulated data; determining whether a difference between the simulated data and the actually measured data is greater than a first threshold; determining an update quantity of the code in a case where the difference is greater than the first threshold; updating the code according to the update quantity, and continuously performing the step of decoding the code by the decoder and performing calculation to obtain simulated data; and outputting the code as the target latent space parameter in a case where the difference is smaller than or equal to the first threshold.
In some embodiments, the update quantity is determined by: $H(v_k) \cdot p_k =- g(v_k)$; wherein

$$g(v_k) = \frac{1}{\|d_{obs}\|^2} J^H (S(v_k) - d_{obs}) + \lambda_k v_k; \quad H(v_k) \approx \frac{1}{\|d_{obs}\|^2} J^H J + \lambda_k I; \quad J_{p,q} = \frac{\partial d_p}{\partial v_q} = \sum_l \frac{\partial d_p}{\partial m_l} \frac{\partial m_l}{\partial v_q}; \text{ J is a}$$

Jacobian matrix, and $J^H$ is a conjugate transpose of J; I is an identity matrix.
In some embodiments, training of the variational auto-encoder deep neural network includes: acquiring training data, and constructing a training set according to the training data; constructing the variational auto-encoder deep neural network according to the training set; constructing a training function of the variational auto-encoder deep neural network according to the training set; and training the variational auto-encoder deep neural network by using the training function.
In some embodiments, the training data includes image data, and the acquiring training data and constructing a training set according to the training data includes: segmenting the image data to obtain an interested target in the image data; distributing a training parameter to the interested target to form an initial training model; and adjusting different orientations of the initial training model to obtain a plurality of deformation training models, so as to obtain the training set.

In         some         embodiments,         the         training         function         includes:

$$L = -\alpha \sum_{q=1}^{Q} \left(1 + \log \sigma_q^2 - \mu_q^2 - \sigma_q^2\right) + \frac{1}{L}\sum_{l=1}^{L}\left(m_l - \widetilde{m}_l\right)^2$$ ; wherein Q is a length of a latent space variable, L is a number of pixels in a model, $\sigma_q^2$ is a q-th component of a variance vector output by the encoder, $\mu_q^2$ is a q-th component of a mean vector output by the encoder, $m_l$ is a l-th component input by the encoder, $\widetilde{m}_l$ is a l-th component output by the decoder, and $\alpha$ is a regularization coefficient for adjusting a KL divergence of a variational auto-encoder.

In some embodiments, the actually measured data includes one of: temporal differential electrical impedance data, absolute electrical impedance data, and microwave data.

In a second aspect, the present disclosure provides an image reconstruction apparatus, including: a first acquiring module configured to acquire actually measured data of a target; a first constructing module configured to construct, according to the actually measured data, an actually measured data inversion objective function which takes a latent space parameter of a variational auto-encoder deep neural network as an unknown number; a first performing module configured to minimize the actually measured data inversion objective function by using the variational auto-encoder deep neural network, so as to obtain a target latent space parameter; and a second performing module configured to decode the target latent space parameter by using the variational auto-encoder deep neural network, so as to obtain a reconstructed image.

In a third aspect, the present disclosure provides an electronic device, including a memory and a processor, wherein the memory stores a computer program, and the processor implements the image reconstruction method according to the first aspect when executing the computer program.

In a fourth aspect, the present disclosure provides a storage medium storing a computer program executable by one or more processors to implement the image reconstruction method according to the first aspect.

In the present disclosure, the actually measured data inversion objective function is minimized by means of the variational auto-encoder deep neural network, so as to obtain the target latent space parameter of the actually measured data inversion objective function, and the target latent space parameter is then decoded by using the variational auto-encoder deep neural network, so as to obtain the reconstructed image. Therefore, the number of unknown numbers in an image reconstruction process is greatly reduced, and meanwhile, a calculation efficiency in the image reconstruction process is improved.

## Brief Description of the Drawings

The scope of the present disclosure will be better understood by reading the following detailed description of exemplary embodiments in conjunction with the accompanying drawings. In the drawings:

FIG. 1 is an overall flowchart of an image reconstruction method according to an embodiment of the present disclosure; and

FIG. 2 is a block diagram of an image reconstruction apparatus according to an embodiment of the present disclosure.

## Detailed Description

To further clarify the objects, technical solutions and advantages of the present disclosure, the present disclosure will be described in further detail below with reference to the accompanying drawings, the described embodiments should not be construed as limiting the present disclosure, and all other embodiments obtained by a person of ordinary skill in the art without creative efforts fall within the protection scope of the present disclosure.

The following descriptions involve "some embodiments" which describe a subset of all possible embodiments, but it should be understood that "some embodiments" may be the same subset or different subsets of all possible embodiments, and may be combined with each other without conflict.

The following description is added if similar descriptions of "first\second\third" appear in the present disclosure, and in the following description, the referred terms "first\second\third" merely distinguish similar objects and do not represent a specific order for the objects, and it should be understood that the specific order or sequential order of "first \second\third" may be interchanged under permission, such that embodiments of the present disclosure described herein can be implemented in an order other than the order illustrated or described herein.

Unless defined otherwise, all technical and scientific terms used herein have the same meanings as those commonly understood by those skilled in the art of the present disclosure. The terms used herein are for the purpose of describing embodiments of the present disclosure only and are not intended to limit the present disclosure.

In image reconstruction, a number of pixels required in a common method is usually much larger than a quantity of data, which is therefore a non-linear ill-conditioned problem that requires reasonable reconstruction relying on priori knowledge. Since there are usually thousands or tens of thousands of unknown numbers, a process of minimizing an objective function is computationally intensive. Furthermore, a way of using priori information in inversion is not flexible. Prior knowledge in the mind of an interpreter is difficult to describe in a mathematical form, such that an inversion process cannot be constrained, and challenges are brought to model reconstruction and interpretation.

Embodiment 1

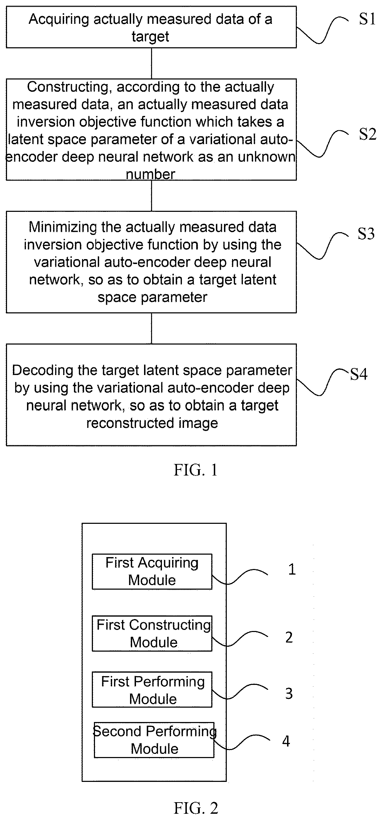

As shown in FIG. 1, the present disclosure provides an image reconstruction method which is applied to an electronic device, and the electronic device may be a server, a mobile terminal, a computer, a cloud platform, or the like. Functions achieved by device data processing in the embodiment of the present disclosure may be achieved by a processor of the electronic device calling program code, the program code may be stored in a computer storage medium. The image reconstruction method includes steps S1 to S4.

Step S1: acquiring actually measured data of a target.

The actually measured data of the target in the present disclosure may be any one of temporal differential electrical impedance data, absolute electrical impedance data, and microwave data.

Step S2: constructing, according to the actually measured data, an actually measured data inversion objective function which takes a latent space parameter of a variational auto-encoder deep neural network as an unknown number.

The variational auto-encoder deep neural network includes an encoder and a decoder, the encoder outputs the latent space parameter, and the decoder is responsible for decoding the latent space parameters output by the encoder.

Step S3: minimizing the actually measured data inversion objective function by using the variational auto-encoder deep neural network, so as to obtain a target latent space parameter.

In some embodiments, the step S3 of minimizing the actually measured data inversion objective function by using the variational auto-encoder deep neural network, so as to obtain a target latent space parameter includes the following steps S31 to S37.

Step S31: setting an initial model according to a target.

The initial model is required to be set according to a type of the actually measured data. Different parameters are preset for the initial model. When the actually measured data is the temporal differential electrical impedance data or absolute electrical impedance data, a conductivity is preset for the initial model. When the actually measured data is the microwave data, a dielectric constant is preset for the initial model.

Step S32: encoding the initial model by using the encoder to obtain a code of the initial model.

The initial model with the preset parameter is encoded by using the encoder of the variational auto-encoder deep neural network to obtain the code of the initial model.

Step S33: decoding the code by the decoder and performing calculation to obtain simulated data.

After the encoding is finished, the encoding result is decoded by the decoder of the variational auto-encoder deep neural network. A preset parameter model is obtained after the decoding. Then, the calculation is performed on the preset parameter model to obtain the simulated data.

(1) When the actually measured data is the temporal differential electrical impedance data, the temporal differential electrical impedance data is simulated by the following formula:

$$d=A\cdot m,$$

wherein m is a discrete conductivity change, d is the temporal differential electrical impedance data calculated by simulation according to a conductivity equation, and A is a forward modeling function denoted here as a matrix.

The discrete conductivity change m may be obtained by decoding a latent space variable by the decoder D of a variational auto-encoder:

$$m=D(v);$$

therefore, a process of calculating the electrical impedance data from the latent space variable can be denoted by S:

$$d=A\cdot D(v)=S(v).$$

(2) When the actually measured data is the absolute electrical impedance data, the absolute electrical impedance data is numerically simulated by the following formula:

$$\mathbf{d} = \mathrm{F}\big(\mathrm{T}(\mathbf{m})\big)$$

wherein m is a discrete organ conductivity, d is the absolute electrical impedance data calculated by simulation according to a Maxwell equation, T is a mapping function for mapping the organ conductivity onto a triangular finite element mesh to generate a thorax conductivity model, and F is a forward modeling function.

The organ conductivity **m** may be obtained by decoding a latent space variable v by the decoder **D** of a variational auto-encoder:

$$\mathbf{m} = \mathbf{D}(\mathbf{v})$$

therefore, a process of calculating voltage simulated data from the latent space variable v can be denoted by S:

$$\mathbf{d} = \mathrm{F}\left(\mathrm{T}\big(\mathbf{D}(\mathbf{v})\big)\right) = \mathrm{S}(\mathbf{v}).$$

(3) In microwave data inversion, electromagnetic scattering data is numerically simulated by the following formula:

$$d = F(m);$$

wherein m is a discrete dielectric constant, d is scattered field data calculated by simulation according to Maxwell equations, and F is a forward modeling function.

The discrete dielectric constant m may be obtained by decoding a latent space variable by the decoder D of a variational auto-encoder:

$$m = D(v);$$

therefore, a process of calculating the electromagnetic data from the latent space variable can be denoted by S:

$$d = F(D(v)) = S(v).$$

Step S34: determining whether a difference between the simulated data and the actually measured data is greater than a first threshold.

Whether a final result converges to the first threshold is determined by comparing the difference between the simulated data and the actually measured data.

In deterministic inversion, the inversion can be equivalent to finding of an optimal parameter v which minimizes the following objective function:

$$\mathbf{C}(\mathbf{v}) = \Phi^{d}(\mathbf{v}) + \lambda\Phi^{v}(\mathbf{v}) = \frac{1}{2}\frac{\|\mathbf{S}(\mathbf{v}) - \mathbf{d}_{\mathrm{obs}}\|^{2}}{\|\mathbf{d}_{\mathrm{obs}}\|^{2}} + \frac{1}{2}\lambda\|\mathbf{v}\|^{2}$$

wherein $\|\ \|$ represents an L2 norm, $\mathbf{d}_{\mathrm{obs}}$ is measured data, and $\lambda$ is a regularization coefficient of the objective function and is used for stabilization of a function optimization process.

Step S35: determining an update quantity of the code when the difference is greater than the first threshold.

When the result cannot converge to the first threshold, the code is required to be updated. When the code is being updated, the update quantity of the code is required to be determined.

The update quantity of the code is required to be determined by the following formula:

$$\mathbf{H}(\mathbf{v}_{k}) \cdot \mathbf{p}_{k} = -\mathbf{g}(\mathbf{v}_{k}).$$

wherein

$$g(\mathbf{v}_k) = \frac{1}{\|\mathbf{d}_{obs}\|^2}\mathbf{J}^H(S(\mathbf{v}_k) - \mathbf{d}_{obs}) + \lambda_k\mathbf{v}_k,$$

$$H(\mathbf{v}_k) \approx \frac{1}{\|\mathbf{d}_{obs}\|^2}\mathbf{J}^H\mathbf{J} + \lambda_k\mathbf{I},$$

$$\mathbf{J}_{p,q} = \frac{\partial d_p}{\partial v_q} = \sum_l \frac{\partial d_p}{\partial m_l}\frac{\partial m_l}{\partial v_q}.$$

**J** is a Jacobian matrix, and **J**$^H$ is a conjugate transpose of **J**. **I** is an identity matrix.

Step S36: updating the code according to the update quantity, and continuously performing the step of decoding the code by the decoder and performing calculation to obtain simulated data.

After the update quantity is determined, the code is updated according to the update quantity, and the step S33 is continued to be performed on the updated code.

After the update quantity is determined, the code is updated according to the following formula:

$$\mathbf{v}_{k+1} = \mathbf{v}_k + \mathbf{p}_k.$$

Step S37: outputting the code as the target latent space parameter when the difference is smaller than or equal to the first threshold.

When the final result is determined to converge to the first threshold according to the difference between the simulated data and the actually measured data, the code corresponding to the simulated data is output as the target latent space parameter.

Step S4: decoding the target latent space parameter by using the variational auto-encoder deep neural network, so as to obtain a target reconstructed image.

After the target latent space parameter is obtained, the target latent space parameter is decoded by using the decoder of the variational auto-encoder deep neural network to obtain a preset parameter model, and the target reconstructed image is finally obtained according to the preset parameter model.

After $\mathbf{v}_{k+1}$ is obtained, $\mathbf{v}_{k+1}$ is decoded by the decoder **D** in the variational auto-encoder, and a dielectric constant model/conductivity model is obtained as:

$$\boldsymbol{m}_{k+1} = \boldsymbol{D}(\boldsymbol{v}_{k+1}).$$

In the present disclosure, the actually measured data inversion objective function is minimized by means of the variational auto-encoder deep neural network, so as to obtain the target latent space parameter of the actually measured data inversion objective function, and the target latent space parameter is then decoded by using the variational auto-encoder deep neural network, so as to obtain the reconstructed image. Therefore, the number of unknown numbers in an image reconstruction process is greatly reduced, and meanwhile, a calculation efficiency in the image reconstruction process is improved.

In some embodiments, required training of the variational auto-encoder deep neural network includes steps S51 to S54.

Step S51: acquiring training data, and constructing a training set according to the training data.

The training data is derived from image data obtained by other imaging means, such as CT scan data, or may be three-dimensional image data obtained by three-dimensional scan data, and the training set is constructed according to the obtained image data.

In some embodiments, the step S51 of acquiring training data, and constructing a training set according to the training data includes steps S511 to S513.

Step S511: segmenting the image data to obtain an interested target in the image data.

Step S512: distributing a training parameter to the interested target to form an initial training model.

For example, when electrical impedance image reconstruction is performed, the assigned training parameter is a conductivity of the target, thereby forming the initial training model.

Step S513: adjusting different orientations of the initial training model to obtain a plurality of deformation training models, so as to obtain the training set.

In order to increase an amount of data of the training model, the training model may be increased by modifying shape of the target.

For example, when the variational auto-encoder deep neural network is being trained using images of the lung, images of the lung obtained by other detection means are obtained firstly. Attributes obtained by different detection means are different. For example, the images of the lung obtained by means of CT do not have conductivity data and microwave data. Therefore, the conductivity is required to be preset for the obtained image. After the conductivity is preset, an initial training model of electrical impedance of the lung is formed. Then, data enhancement is performed on the formed initial training model. That is, lung lobes of the lung image are randomly cut off to change the electrical impedance in the whole initial training model, such that a plurality of deformation training models are formed. Finally, the training set is obtained by the plurality of deformation training models.

Step S52: constructing the variational auto-encoder deep neural network according to the training set.

In the present embodiment (temporal differential electrical impedance imaging embodiment), the designed variational auto-encoder deep neural network includes an encoder and a decoder. Input and output of the encoder have sizes of $32{\times}48{\times}48$. In the encoder, convolution and activation are alternately applied three times to output a tensor with a size of $4{\times}6{\times}6{\times}32$. After the tensor is rearranged into a vector, two dense layers are applied to generate mean and variance vectors respectively. Gaussian distribution is sampled using a re-parameterization method.

In the present embodiment (temporal differential electrical impedance imaging embodiment), a length of the latent space variable is 32, and a compression ratio of $32/73728=0.043\%$ is achieved. A structure of the decoder is symmetrical to that of the encoder, except that upsampling is realized by a transposed convolution layer. A network is subjected to nonlinear activation using a linear rectification function (ReLU).

Step S53: constructing a training function of the variational auto-encoder deep neural network according to the training set.

In some embodiments, the training function includes:

$$L = -\alpha \sum_{q=1}^{Q} \left(1 + \log \sigma_q^2 - \mu_q^2 - \sigma_q^2\right) + \frac{1}{L} \sum_{l=1}^{L} (m_l - \tilde{m}_l)^2,$$

wherein Q is a length of a latent space variable, L is a number of pixels in a model, $\sigma_q^2$ is a q-th component of a variance vector output by the encoder, $\mu_q^2$ is a q-th component of a mean vector output by the encoder, is a l-th component input by the encoder, $\tilde{m}_l$ is a l-th component output by the decoder, and $\alpha$ is a regularization coefficient for adjusting a KL divergence of a variational auto-encoder.

Step S54: training the variational auto-encoder deep neural network by using the training function.

Finally, the designed variational auto-encoder deep neural network is trained by using an Adam optimization algorithm and the training function. After the training is finished, optimal parameters of the variational auto-encoder deep neural network can be obtained.

In the present disclosure, the actually measured data inversion objective function is minimized by means of the variational auto-encoder deep neural network, so as to obtain the target latent space parameter of the actually measured data inversion objective function, and the target latent space parameter is then decoded by using the variational auto-encoder deep neural network, so as to obtain the reconstructed image. Therefore, the number of unknown numbers in an image reconstruction process is greatly reduced, and meanwhile, a calculation efficiency in the image reconstruction process is improved.

Embodiment 2

Based on the foregoing embodiment, an embodiment of the present disclosure provides an image reconstruction apparatus, and each module included in the apparatus and each unit included in each module may be implemented by a processor in a computer device. Certainly, the module or unit can also be implemented by a logic circuit. During implementation, the processor may be a central processing unit (CPU), a microprocessor unit (MPU), a digital signal processor (DSP), a field programmable gate array (FPGA), or the like.

As shown in FIG. 5, in a second aspect, an image reconstruction apparatus is provided, which includes: a first acquiring module 1, a first constructing module 2, a first performing module 3, and a second performing module 4.

The first acquiring module 1 is configured to acquire actually measured data of a target. The first constructing module 2 is configured to construct, according to the actually measured data, an actually measured data inversion objective function which takes a latent space parameter of a variational auto-encoder deep neural network as an unknown number. The first performing module 3 is configured to minimize the actually measured data inversion objective function by using the variational auto-encoder deep neural network, so as to obtain a target latent space parameter. The second performing module 4 is configured to decode the target latent space parameter by using the variational auto-encoder deep neural network, so as to obtain a reconstructed image.

In some embodiments, the first performing module 3 includes: a first setting module, a third performing module, a fourth performing module, a first determining module, a second determining module, and a first output module.

The first setting module is configured to set an initial model according to a target. The third performing module is configured to encode the initial model by using the encoder to obtain a code of the initial model. The fourth performing module is configured to decode the code by the decoder and perform calculation to obtain simulated data. The first determining module is configured to determine whether a difference between the simulated data and the actually measured data is greater than a first threshold. The second determining module is configured to determine an update quantity of the code when the difference is greater than the first threshold. The first output module is configured to output the code as the target latent space parameter when the difference is smaller than or equal to the first threshold.

In some embodiments, the image reconstruction apparatus further includes: a second acquiring module, a fifth performing module, a sixth performing module, and a seventh performing module.

The second acquiring module is configured to acquire training data, and construct a training set according to the training data. The fifth performing module is configured to construct the variational auto-encoder deep neural network according to the training set. The sixth performing module is configured to construct a training function of the variational auto-encoder deep neural network according to the training set. The seventh performing module is configured to train the variational auto-encoder deep neural network by using the training function.

In some embodiments, the fifth performing module includes: an eighth performing module, a ninth performing module, and a tenth performing module.

The eighth performing module is configured to segment the image data to obtain an interested target in the image data. The ninth performing module is configured to distribute a training parameter to the interested target to form an initial training model. The tenth performing module is configured to adjust different orientations of the initial training model to obtain a plurality of deformation training models, so as to obtain the training set.

The modules in the image reconstruction apparatus described above may be wholly or partially implemented by software, hardware and a combination thereof. The modules may be embedded in or independent of the processor in the device in hardware, or may be stored in a memory in a processing apparatus in software, such that the processor can readily call the modules to execute operations corresponding to the modules. It should be noted that, the division of the modules in the embodiment of the present disclosure is illustrative, and is only logical function division, and there may be another division manner in actual implementation.

Embodiment 3

In a third aspect, an electronic device is provided, which includes a memory and a processor, wherein the memory stores a computer program, and the processor implements steps of an image reconstruction method when executing the computer program.

Embodiment 4

In a fourth aspect, a storage medium is provided, which stores a computer program executable by one or more processors, and the computer program can be used to implement the steps of any image reconstruction method according to the first aspect.

It will be understood by those skilled in the art that all or part of the processes of the methods according to the embodiments described above may be implemented by a computer program instructing related hardware, and the computer program may be stored in a non-volatile computer-readable storage medium, and when executed, may include the processes of the embodiments of the methods described above. Any reference to memories, storage, databases or other media used in the embodiments of the present disclosure can include at least one of a non-volatile memory and a volatile memory. The non-volatile memory may include a read-only memory (ROM), magnetic tape, a floppy disk, a flash memory, an optical memory, or the like. The volatile memory can include a random access memory (RAM) or an external cache memory. By way of illustration and not limitation, the RAM can take many forms, such as a static random access memory (SRAM), a dynamic random access memory (DRAM), or the like.

It should be appreciated that reference throughout this specification to "one embodiment" or "some embodiments" means that a particular feature, structure or characteristic associated with the embodiment is included in at least one embodiment of the present disclosure. Therefore, "in one embodiment" or "in an embodiment" appearing in various places throughout this specification does not necessarily refer to the same embodiment. Furthermore, the particular features, structures or characteristics may be combined in any suitable manner in one or more embodiments. It should be understood that, in the embodiments of the present disclosure, the sequence numbers of the processes do not imply an execution sequence, and the execution sequence of each process should be determined by functions and internal logic of the process, and should not constitute any limitation to the implementation process of the embodiments of the present disclosure. The above-mentioned sequence numbers of the embodiments of the present disclosure are merely for description, and do not represent ranking of the embodiments.

It should be noted that, in the whole text, the term "comprising", "including", or any other variant thereof is intended to encompass a non-exclusive inclusion, so that the process, method, article or apparatus including a series of elements does not only include those elements, but also includes other elements not explicitly listed, or further includes inherent elements of the process, method, article or apparatus. In cases where no further limitations are made, the element defined with the statement "including one..." does not exclude the case that other identical elements further exist in the process, method, article or apparatus including the elements.

In several embodiments provided in the present disclosure, it should be understood that the disclosed device and method may be implemented in other manners. The embodiment of the device described above is merely schematic. For example, the division of the units is merely logical function division, and there may be other division manners in actual implementation. For example, a plurality of units or components may be combined or integrated into another system, or some features may be ignored or not performed. In addition, the displayed or discussed mutual couplings or direct couplings or communication connections between components may be implemented through some interfaces. The indirect couplings or communication connections between the devices or units may be implemented in electric, mechanical or other forms.

The units described as separate parts may or may not be physically separate, and parts displayed as units may or may not be physical units, may be located in one position, or may be distributed on a plurality of network units; some or all of the units can be selected according to actual needs to achieve the purpose of the solution of the embodiment.

In addition, the functional units in the embodiments of the present disclosure may be all integrated into one processing unit, or each of the units may exist alone, or two or more units are integrated into one unit; the integrated unit may be implemented in a form of hardware, or may also be implemented in a form of hardware and a software functional unit.

Those of ordinary skill in the art will understand that all or part of the steps of implementing the method embodiments may be implemented by a program instructing related hardware, and the program may be stored in a computer-readable storage medium, and when executed, executes the steps including the method embodiments. The aforementioned storage medium includes various media which can store program codes, such as a removable storage device, a read only memory (ROM), a magnetic disk, an optical disk, or the like.

Alternatively, the integrated unit in the present disclosure described above may be stored in a computer-readable storage medium when implemented in the form of the software functional module and sold or used as a separate product. Based on such an understanding, the technical solutions of the embodiments of the present disclosure essentially, or the part contributing to the related art may be implemented in the form of a software product. The computer software product is stored in a storage medium and includes several instructions for instructing a controller to perform all or a part of the method according to the embodiments of the present disclosure. The storage medium includes various media which can store program codes, such as a removable storage device, an ROM, a magnetic disk, an optical disk, or the like.

The foregoing descriptions are merely embodiments of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

**Claims**

1. An image reconstruction method, comprising:

   acquiring actually measured data of a target;
   constructing, according to the actually measured data, an actually measured data inversion objective function which takes a latent space parameter of a variational auto-encoder deep neural network as an unknown number;
   minimizing the actually measured data inversion objective function by using the variational auto-encoder deep neural network, so as to obtain a target latent space parameter; and
   decoding the target latent space parameter by using the variational auto-encoder deep neural network, so as to obtain a target reconstructed image.

2. The image reconstruction method according to claim 1, wherein the variational auto-encoder deep neural network comprises a decoder and an encoder; the minimizing the actually measured data inversion objective function by using the variational auto-encoder deep neural network, so as to obtain a target latent space parameter comprises:

   setting an initial model according to the target;

encoding the initial model by using the encoder to obtain a code of the initial model;

decoding the code by the decoder and performing calculation to obtain simulated data;

determining whether a difference between the simulated data and the actually measured data is greater than a first threshold;

determining an update quantity of the code in a case where the difference is greater than the first threshold;

updating the code according to the update quantity, and continuously performing the step of decoding the code by the decoder and performing calculation to obtain simulated data; and

outputting the code as the target latent space parameter in a case where the difference is smaller than or equal to the first threshold.

3. The image reconstruction method according to claim 2, wherein the update quantity is determined by:

$$\mathbf{H}(\mathbf{v}_k) \cdot \mathbf{p}_k = -\mathbf{g}(\mathbf{v}_k);$$

wherein

$$\mathbf{g}(\mathbf{v}_k) = \frac{1}{\|\mathbf{d}_{obs}\|^2} \mathbf{J}^H(S(\mathbf{v}_k) - \mathbf{d}_{obs}) + \lambda_k \mathbf{v}_k;$$

$$\mathbf{H}(\mathbf{v}_k) \approx \frac{1}{\|\mathbf{d}_{obs}\|^2} \mathbf{J}^H \mathbf{J} + \lambda_k \mathbf{I};$$

$$\mathbf{J}_{p,q} = \frac{\partial \mathbf{d}_p}{\partial \mathbf{v}_q} = \sum_l \frac{\partial \mathbf{d}_p}{\partial \mathbf{m}_l} \frac{\partial \mathbf{m}_l}{\partial \mathbf{v}_q};$$

**J** is a Jacobian matrix, and $\mathbf{J}^H$ is a conjugate transpose of **J**; **I** is an identity matrix.

4. The image reconstruction method according to claim 1, wherein training of the variational auto-encoder deep neural network comprises:

acquiring training data, and constructing a training set according to the training data;

constructing the variational auto-encoder deep neural network according to the training set;

constructing a training function of the variational auto-encoder deep neural network according to the training set; and

training the variational auto-encoder deep neural network by using the training function.

5. The image reconstruction method according to claim 4, wherein the training data comprises image data, and the acquiring training data and constructing a training set according to the training data comprises:

segmenting the image data to obtain an interested target in the image data;

distributing a training parameter to the interested target to form an initial training model; and

adjusting different orientations of the initial training model to obtain a plurality of deformation training models, so as to obtain the training set.

6. The image reconstruction method according to claim 4, wherein the training function comprises:

$$L = -\alpha \sum_{q=1}^{Q} \left(1 + \log \sigma_q^2 - \mu_q^2 - \sigma_q^2\right) + \frac{1}{L} \sum_{l=1}^{L} (m_l - \tilde{m}_l)^2;$$

wherein Q is a length of a latent space variable, L is a number of pixels in a model, $\sigma_q^2$ is a q-th component of a variance vector output by the encoder, $\mu_q^2$ is a q-th component of a mean vector output by the encoder, is a l-th component input by the encoder, $\tilde{m}_l$ is a l-th component output by the decoder, and $\alpha$ is a regularization coefficient for adjusting a KL divergence of a variational auto-encoder.

7. The image reconstruction method according to claim 1, wherein the actually measured data comprises one of: temporal differential electrical impedance data, absolute electrical impedance data, and microwave data.

8. An image reconstruction apparatus, comprising:

a first acquiring module configured to acquire actually measured data of a target;
a first constructing module configured to construct, according to the actually measured data, an actually measured data inversion objective function which takes a latent space parameter of a variational auto-encoder deep neural network as an unknown number;
a first performing module configured to minimize the actually measured data inversion objective function by using the variational auto-encoder deep neural network, so as to obtain a target latent space parameter; and
a second performing module configured to decode the target latent space parameter by using the variational auto-encoder deep neural network, so as to obtain a reconstructed image.

9. An electronic device, comprising:
a memory and a processor, the memory having stored thereon a computer program which, when executed by the processor, performs the image reconstruction method according to any one of claims 1 to 7.

10. A storage medium storing a computer program executable by one or more processors to implement the image reconstruction method according to any one of claims 1 to 7.

FIG. 1

FIG. 2

## INTERNATIONAL SEARCH REPORT

| International application No. |
|---|
| **PCT/CN2023/079245** |

**A. CLASSIFICATION OF SUBJECT MATTER**

G06T11/00(2006.01)i

According to International Patent Classification (IPC) or to both national classification and IPC

**B. FIELDS SEARCHED**

Minimum documentation searched (classification system followed by classification symbols)

IPC:G06T,G06K,G06N

Documentation searched other than minimum documentation to the extent that such documents are included in the fields searched

Electronic data base consulted during the international search (name of data base and, where practicable, search terms used)

CNABS, CNTXT, ENTXTC, DWPI, ENTXT, CNKI: 变分自编码, 编码, 解码, 神经网络, 目标函数, 损失函数, 隐空间, 隐藏, 对抗生成网络, 训练, 电导, 电抗, 医学, 图像, 重构, 重建, variational auto-encoder, VAE, encod+, cod+, decod+, neural network, objective function, loss function, hidden, generative, GAN, train+, conduct+, reactance, medical, image, reconstruct+

**C. DOCUMENTS CONSIDERED TO BE RELEVANT**

| Category* | Citation of document, with indication, where appropriate, of the relevant passages | Relevant to claim No. |
|---|---|---|
| X | CN 112200306 A (BEIHANG UNIVERSITY) 08 January 2021 (2021-01-08) description, paragraphs [0028]-[0036], and figure 1 | 1-10 |
| A | CN 111584072 A (SUZHOU MAIKANG MEDICAL TECHNOLOGY CO., LTD.) 25 August 2020 (2020-08-25) entire document | 1-10 |
| A | CN 109146988 A (NANJING UNIVERSITY OF POSTS AND TELECOMMUNICATIONS) 04 January 2019 (2019-01-04) entire document | 1-10 |
| A | US 2021074036 A1 (MEMORIAL SLOAN KETTERING CANCER CENTER) 11 March 2021 (2021-03-11) entire document | 1-10 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 June 2023** | **21 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/079245**

| Patent document cited in search report | | | Publication date (day/month/year) | Patent family member(s) | | | Publication date (day/month/year) |
|---|---|---|---|---|---|---|---|
| CN | 112200306 | A | 08 January 2021 | WO | 2022077866 | A1 | 21 April 2022 |
| | | | | CN | 112200306 | B | 27 September 2022 |
| CN | 111584072 | A | 25 August 2020 | None | | | |
| CN | 109146988 | A | 04 January 2019 | CN | 109146988 | B | 30 August 2022 |
| US | 2021074036 | A1 | 11 March 2021 | EP | 3769284 | A1 | 27 January 2021 |
| | | | | EP | 3769284 | A4 | 22 December 2021 |
| | | | | CA | 3095109 | A1 | 26 September 2019 |
| | | | | WO | 2019183584 | A1 | 26 September 2019 |
| | | | | AU | 2019238323 | A1 | 15 October 2020 |

Form PCT/ISA/210 (patent family annex) (July 2022)

**EP 4 513 436 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210417793